# EUROPEAN PATENT APPLICATION

(11) **EP 4 525 396 A1**
(43) Date of publication of application: **19.03.2025**
(21) Application number: 23815095.7
(22) Date of filing: 26.05.2023
(51) Int. Cl.: H04L 45/247

(54) **LINK FAULT PROCESSING METHOD, RELATED APPARATUS, STORAGE MEDIUM, AND PROGRAM PRODUCT**

(30) Priority: 02.06.2022 CN 202210624676
(71) Applicant: Huawei Technologies Co., Ltd., Shenzhen, Guangdong 518129 (CN)
(72) Inventor: LI, Ling, Shenzhen, Guangdong 518129 (CN); LIU, Shixing, Shenzhen, Guangdong 518129 (CN); JI, Zhigang, Shenzhen, Guangdong 518129 (CN); LI, Jie, Shenzhen, Guangdong 518129 (CN); WEN, Huafeng, Shenzhen, Guangdong 518129 (CN); WANG, Haibo, Shenzhen, Guangdong 518129 (CN); WANG, Songlin, Shenzhen, Guangdong 518129 (CN)
(74) Representative: Thun, Clemens
(86) International application number: PCT/CN2023/096491
(87) International publication number: WO 2023/231912

(57) **Abstract**

This application discloses a link fault handling method, a related apparatus, a storage medium, and a program product, and belongs to the field of communication technologies. In this method, a forwarding plane component of a network device updates a reference state table in time by actively polling a port status register, so that when forwarding a data flow, the forwarding plane component can sense a local faulty link in time based on the reference state table, and perform link switching in time, and a PHY chip does not need to report fault information to a control plane CPU in the network device, or wait for the control plane CPU to deliver an instruction. That is, this solution does not depend on control plane path computation, and does not require additional communication from a data plane to a control plane, to avoid a delay caused by fault handling of the CPU. This solution shortens time consumed from occurrence of a link fault to completion of link switching, increases a convergence speed of link fault handling, alleviates impact of the link fault on a service, and greatly improves network reliability.

## Description

This application claims priority to Chinese Patent Application No. 202210624676.2, filed on June 2, 2022 and entitled "LINK FAULT HANDLING METHOD, RELATED APPARATUS, STORAGE MEDIUM, AND PROGRAM PRODUCT", which is incorporated herein by reference in its entirety.

### TECHNICAL FIELD

This application relates to the field of communication technologies, and in particular, to a link fault handling method, a related apparatus, a storage medium, and a program product.

### BACKGROUND

Currently, a path used for transmitting a data flow between network devices is referred to as a link. Once a link in a network is faulty, the fault needs to be handled as soon as possible to ensure that a subsequent data flow can be normally sent.

The network device includes a physical (physical, PHY) chip, a forwarding plane component, a central processing unit (central processing unit, CPU), and the like. The PHY chip has a plurality of ports, and the forwarding plane component stores a forwarding table and a link state table that are required for forwarding a data flow. After receiving a data flow sent by a previous-hop network device, a port of the network device transmits the received data flow to the forwarding plane component. The forwarding plane component queries the forwarding table to determine an egress port corresponding to the data flow, and then queries the link state table to determine a link state of a link on which the egress port is located. When the found link state is a faulty state, that is, the link on which the egress port is located is a faulty link, the forwarding plane component determines an alternative link of the faulty link, and changes the egress port corresponding to the data flow in the forwarding table to an egress port corresponding to the alternative link. The forwarding plane component sends the data flow based on a changed forwarding table. Simply, when forwarding a data flow, the network device needs to determine, based on the link state table, whether to perform link switching. The link state table is updated only after a port is faulty. In other words, if a port is faulty, the PHY chip sends a hardware interrupt signal, that is, reports fault information, to the CPU. The hardware interrupt signal indicates that the port is faulty. The CPU delivers, to the forwarding plane component based on the hardware interrupt signal, an instruction used to instruct to update the link state table. After receiving the instruction, the forwarding plane component changes a state of a link on which the port is located in the link state table to a faulty state.

However, there are various types of services in network communication, and most of the services such as an online game and payment and settlement, are sensitive to a delay. In the foregoing solution, after a port is faulty, the PHY chip needs to report fault information to the CPU, and can change the link state table only after the CPU delivers an instruction to the forwarding plane component. A process of reporting the fault information and waiting for the instruction to be delivered is time-consuming. As a result, the link state table cannot be updated in time. Untimely update of the link state table causes untimely link switching. It can be learned that, in the foregoing solution, long time is consumed from occurrence of a link fault to execution of link switching, causing service interruption.

### SUMMARY

Embodiments of this application provide a link fault handling method, a related apparatus, a storage medium, and a program product, to shorten time consumed from occurrence of a link fault to completion of link switching, and alleviate impact of the link fault on a service.

According to a first aspect, a link fault handling method is provided. The method is applied to a network device. The network device includes a forwarding plane component, a port status register, and a plurality of ports. The method includes:

The forwarding plane component of the network device maintains a reference state table by polling the port status register, where the reference state table indicates whether a plurality of links on which the plurality of ports are respectively located are faulty. The forwarding plane component queries a forwarding table and the reference state table based on a to-be-forwarded data flow, to determine whether a link used for transmitting the data flow is a faulty link. When determining that the link used for transmitting the data flow is the faulty link, the forwarding plane component determines an alternative link of the faulty link. The forwarding plane component updates the forwarding table based on the alternative link, to switch the data flow to the alternative link.

In this solution, the forwarding plane component updates the reference state table in time by actively polling the port status register, so that when forwarding a data flow, the forwarding plane component can sense a local faulty link in time based on the reference state table, and perform link switching in time, and a PHY chip does not need to report fault information to a control plane CPU in the network device, or wait for the CPU to deliver a link switching instruction. That is, this solution does not depend on control plane path computation, and does not require additional communication from a data plane to a control plane, to avoid a delay caused by fault handling of the CPU. This solution shortens time from occurrence of a link fault to completion of link switching, increases a convergence speed of link fault handling, and alleviates impact of the link fault on a service.

The network device further includes a PHY chip. The plurality of ports are ports of the PHY chip. The port status register is a register in the PHY chip. A value of the port status register is changed by the PHY chip when the PHY chip detects that a faulty port exists in the plurality of ports.

The reference state table includes a link state table, and the link state table is used for recording a link state of each of the plurality of links. Based on this, that the forwarding plane component maintains the reference state table by polling the port status register includes: The forwarding plane component polls the port status register, to determine whether a port that has a state change exists in the plurality of ports, where the state change includes a change from an available state to an unavailable state. When determining that the port that has the state change exists in the plurality of ports, the forwarding plane component changes a first link state in the link state table to a faulty state, where the first link state is a state of a link on which the port that has the state change is located.

Optionally, the link state table records a correspondence between link indexes and link states of the plurality of links. Before that the forwarding plane component changes the first link state in the link state table to the faulty state, the method further includes: The forwarding plane component queries a port and link index mapping table for a link index corresponding to a first port index, to obtain a first link index, where the first port index is an index of the port that has the state change. The forwarding plane component queries the link state table for a link state corresponding to the first link index, to obtain the first link state.

In an implementation in which the reference state table includes the link state table, that the forwarding plane component queries the forwarding table and the reference state table based on the to-be-forwarded data flow, to determine whether the link used for transmitting the data flow is the faulty link includes: The forwarding plane component queries the forwarding table for an egress port corresponding to the data flow. The forwarding plane component queries the link state table for a link state of a link on which the egress port is located. When the link state of the link on which the egress port is located is a faulty state, the forwarding plane component determines that the link used for transmitting the data flow is the faulty link.

Optionally, the forwarding plane component queries, through a fast reroute (fast reroute, FRR) component, the link state table for the link state of the link on which the egress port is located. The FRR component is configured to implement an FRR mechanism.

Alternatively, the reference state table includes a port state table, and the port state table is used for recording a port state of each of the plurality of ports. Based on this, that the forwarding plane component maintains the reference state table by polling the port status register includes: The forwarding plane component polls the port status register, to determine whether a port that has a state change exists in the plurality of ports, where the state change includes a change from an available state to an unavailable state. When determining that the port that has the state change exists in the plurality of ports, the forwarding plane component changes a first port state in the port state table to an unavailable state, where the first port state is a state of the port that has the state change.

Optionally, the port state table records a correspondence between port indexes and port states of the plurality of ports. Before that the forwarding plane component changes the first port state in the port state table to the unavailable state, the method further includes: The forwarding plane component queries the port state table for a port state corresponding to a first port index, to obtain the first port state, where the first port index is an index of the port that has the state change.

In an implementation in which the reference state table includes the port state table, that the forwarding plane component queries the forwarding table and the reference state table based on the to-be-forwarded data flow, to determine whether the link used for transmitting the data flow is the faulty link includes: The forwarding plane component queries the forwarding table for an egress port corresponding to the data flow. The forwarding plane component queries the port state table for a port state of the egress port. When the port state of the egress port is an unavailable state, the forwarding plane component determines that the link used for transmitting the data flow is the faulty link.

In this solution, an implementation in which the forwarding plane component determines the alternative link of the faulty link is: The forwarding plane component obtains a standby link corresponding to the faulty link from a correspondence between active and standby links through the fast reroute mechanism to serve as the alternative link. In this way, active/standby switching can be performed quickly without path re-computation.

Another implementation in which the forwarding plane component determines the alternative link of the faulty link is: The forwarding plane component determines the alternative link from a plurality of equal-cost paths of the faulty link by using a hash algorithm. That is, a plurality of equal-cost paths are pre-determined, to implement fast reroute by using the hash algorithm. There is no need to perform path re-computation based on a network topology. For example, there is no need to perform link re-computation based on the network topology and by using an open shortest path first (open shortest path first, OSPF) algorithm. In this way, convergence time of link fault handling can also be shortened as much as possible.

Optionally, the forwarding plane component polls the port status register through a sub-millisecond-level polling mechanism. In this way, sub-millisecond-level path switching can be implemented in a case of a link fault.

Optionally, the forwarding plane component is a programmable logic device. In this way, this solution can be implemented by correspondingly changing related logic of link fault handling on an existing forwarding plane component.

According to a second aspect, a link fault handling apparatus is provided. The link fault handling apparatus has a function of implementing behavior of the link fault handling method in the first aspect. The link fault handling apparatus includes one or more modules, and the one or more modules are configured to implement the link fault handling method provided in the first aspect.

In other words, a link fault handling apparatus is provided. The apparatus is used in a forwarding plane component of a network device. The network device further includes a plurality of ports and port status registers. The apparatus includes:
a polling module, configured to maintain a reference state table by polling the port status register, where the reference state table indicates whether a plurality of links on which the plurality of ports are respectively located are faulty;
a table query module, configured to query a forwarding table and the reference state table based on a to-be-forwarded data flow, to determine whether a link used for transmitting the data flow is a faulty link;
a determining module, configured to: when determining that the link used for transmitting the data flow is the faulty link, determine an alternative link of the faulty link; and
a link switching module, configured to update the forwarding table based on the alternative link, to switch the data flow to the alternative link.

Optionally, the reference state table includes a link state table, and the link state table is used for recording a link state of each of the plurality of links.

The polling module includes:
a first polling submodule, configured to poll the port status register, to determine whether a port that has a state change exists in the plurality of ports, where the state change includes a change from an available state to an unavailable state; and
a second update submodule, configured to: when determining that the port that has the state change exists in the plurality of ports, change a first link state in the link state table to a faulty state, where the first link state is a state of a link on which the port that has the state change is located.

Optionally, the link state table records a correspondence between link indexes and link states of the plurality of links.

The polling module further includes:
a first query submodule, configured to query a port and link index mapping table for a link index corresponding to a first port index, to obtain a first link index, where the first port index is an index of the port that has the state change; and
a second query submodule, configured to query the link state table for a link state corresponding to the first link index, to obtain the first link state.

Optionally, the table query module includes:
a third query submodule, configured to query the forwarding table for an egress port corresponding to the data flow;
a fourth query submodule, configured to query the link state table for a link state of a link on which the egress port is located; and
a first determining submodule, configured to: when the link state of the link on which the egress port is located is a faulty state, determine that the link used for transmitting the data flow is the faulty link.

Optionally, the forwarding plane component queries, through a fast reroute mechanism, the link state table for the link state of the link on which the egress port is located.

Optionally, the reference state table includes a port state table, and the port state table is used for recording a port state of each of the plurality of ports.

The polling module includes:
a second polling submodule, configured to poll the port status register, to determine whether a port that has a state change exists in the plurality of ports, where the state change includes a change from an available state to an unavailable state; and
a second update submodule, configured to: when it is determined that the port that has the state change exists in the plurality of ports, change a first port state in the port state table to an unavailable state, where the first port state is a state of the port that has the state change.

Optionally, the port state table records a correspondence between port indexes and port states of the plurality of ports.

The polling module further includes:
a fifth query submodule, configured to query the port state table for a port state corresponding to a first port index, to obtain the first port state, where the first port index is an index of the port that has the state change.

Optionally, the table query module includes:
a sixth query submodule, configured to query the forwarding table for an egress port corresponding to the data flow;
a seventh query submodule, configured to query the port state table for a port state of the egress port; and
a second determining submodule, configured to: when the port state of the egress port is an unavailable state, determine that the link used for transmitting the data flow is the faulty link.

Optionally, the determining module includes:
an obtaining submodule, configured to obtain a standby link corresponding to the faulty link from a correspondence between active and standby links through the fast reroute mechanism to serve as the alternative link.

Optionally, the determining module includes:
a third determining submodule, configured to determine the alternative link from a plurality of equal-cost links of the faulty link by using a hash algorithm.

Optionally, the forwarding plane component polls the port status register through a sub-millisecond-level polling mechanism.

Optionally, the network device further includes a PHY chip. The plurality of ports are ports of the PHY chip. The port status register is a register in the PHY chip. A value of the port status register is changed by the PHY chip when the PHY chip detects that a faulty port exists in the plurality of ports.

Optionally, the forwarding plane component is a programmable logic device.

According to a third aspect, a network device is provided. The network device includes a forwarding plane component, a port status register, and a plurality of ports. The network device is configured to implement the steps of the link fault handling method provided in the first aspect through the forwarding plane component.

According to a fourth aspect, a network device is provided. The network device includes a forwarding plane component and a memory. The memory is configured to: store a program for performing the link fault handling method provided in the first aspect, and store related data used for implementing the link fault handling method provided in the first aspect. The forwarding plane component is configured to execute the program stored in the memory. The network device may further include a communication bus. The communication bus is configured to establish a connection between the forwarding plane component and the memory.

According to a fifth aspect, a computer-readable storage medium is provided. The computer-readable storage medium stores instructions. When the instructions are run on a network device, the network device is enabled to perform the link fault handling method in the first aspect.

According to a sixth aspect, a computer program product including instructions is provided. When the instructions are run on a network device, the network device is enabled to perform the link fault handling method in the first aspect.

Technical effects achieved in the second aspect, the third aspect, the fourth aspect, the fifth aspect, and the sixth aspect are similar to technical effects achieved by corresponding technical means in the first aspect. Details are not described herein again.

The technical solutions provided in this application include at least the following beneficial effects:
In the solutions, the PHY chip does not need to report fault information to the control plane CPU in the network device, or wait for the control plane CPU to deliver an instruction. The forwarding plane component of the network device updates the reference state table in time by actively polling the port status register, so that when forwarding the data flow, the forwarding plane component can sense the local faulty link in time based on the reference state table, and perform link switching in time. The reference state table indicates whether the plurality of links on which the plurality of ports of the network device are respectively located are faulty. That is, the solutions do not depend on control plane path computation, and do not require additional communication from the data plane to the control plane, to avoid the delay caused by the fault handling of the CPU. In the solutions, short time is consumed from the occurrence of the link fault to completion of the link switching, the convergence speed of the link fault handling is higher and more stable, the impact of the link fault on the service is small, and network reliability is greatly improved.

### BRIEF DESCRIPTION OF DRAWINGS

FIG. 1 is a schematic diagram of a multi-level switching architecture in a data center scenario according to an embodiment of this application;
FIG. 2 is a flowchart of a link fault handling method according to an embodiment of this application;
FIG. 3 is a flowchart of another link fault handling method according to an embodiment of this application;
FIG. 4 is a schematic diagram of still another link fault handling method according to an embodiment of this application;
FIG. 5 shows key points of a solution related to a link fault handling method according to an embodiment of this application;
FIG. 6 is a schematic diagram of a structure of a link fault handling apparatus according to an embodiment of this application;
FIG. 7 is a schematic diagram of a structure of a network device according to an embodiment of this application; and
FIG. 8 is a schematic diagram of a structure of another network device according to an embodiment of this application.

### DESCRIPTION OF EMBODIMENTS

To make objectives, technical solutions, and advantages of this application clearer, the following further describes implementations of this application in detail with reference to the accompanying drawings.

First, a network architecture and a service scenario in embodiments of this application are described.

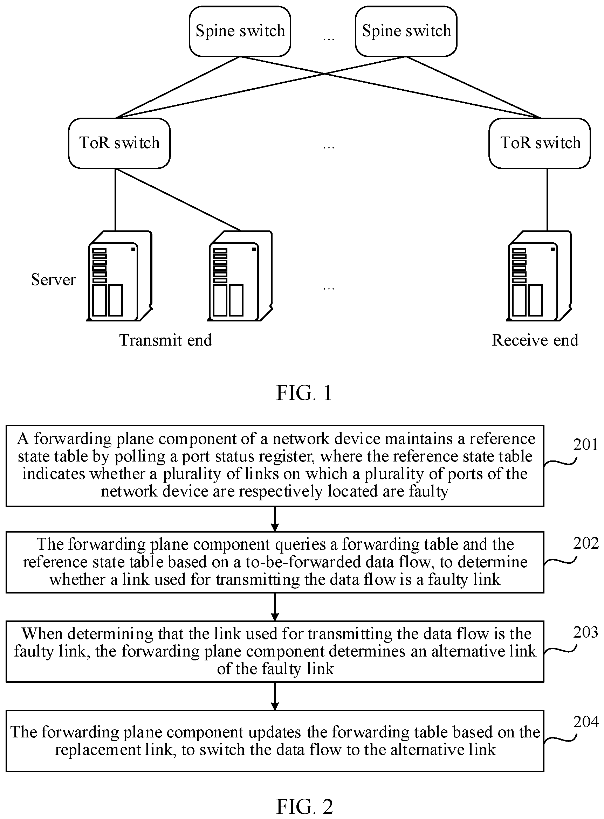

A link fault handling method provided in embodiments of this application may be applied to a network device in a data center scenario. FIG. 1 is a schematic diagram of a multi-level switching architecture in a data center scenario according to an embodiment of this application. The multi-level switching architecture is, for example, a close architecture. FIG. 1 shows three devices in the multi-level switching architecture, namely, a user equipment, a top of rack (top of rack, ToR) switch, and a spine (spine) switch. The user equipment is, for example, a server at a transmit end or a server at a receive end. The ToR switch is a leaf (leaf) switch, is located on an access side, and is configured to connect the user equipment to a data center. The spine switch is located at an aggregation layer and is connected to the ToR switch. Service traffic between the server at the transmit end and the server at the receive end needs to pass through the ToR switch and spine switch. The link fault handling method provided in embodiments of this application may be applied to the ToR switch and the spine switch.

In addition to being applied to the network device in the data center scenario, this solution may also be applied to a network device in another scenario. This is not limited in embodiments of this application. The network device may be any device that has a forwarding function, such as a switch or a router. The network device includes a forwarding plane component, a port status register, a plurality of ports, and a control plane CPU. The link fault handling method provided in embodiments of this application is applied to the forwarding plane component of the network device, without the control plane CPU. Optionally, the forwarding plane component may also be referred to as a forwarding apparatus.

The network device further includes a PHY chip. The plurality of ports in the network device are ports of the PHY chip. The port status register is a register in the PHY chip. The port status register is configured to store a port state of each of the plurality of ports. When a faulty port exists in the plurality of ports, the PHY chip immediately senses the faulty port, and updates a value of a bit corresponding to the faulty port in the port status register.

In addition, the network device may be in a box form, a frame form, or the like. A forwarding plane component and a control plane CPU of a network device in the box form may be on a same board (board), and the forwarding plane component is configured to handle a link fault problem caused by a fault of a port of the network device. The network device in the box form may include a PHY chip.

A network device in the frame form includes a main control board and at least one interface board. Each interface board includes a PHY chip and a forwarding plane component. A plurality of ports included in the network device are distributed on the at least one PHY chip. Each PHY chip includes a port status register. Each PHY chip stores, through the port status register of the PHY chip, a state of each port included in the PHY chip. The main control board of the network device in the frame form includes a control plane CPU. This solution may be applied to the forwarding plane component on each interface board, to handle, through the forwarding plane component, a link fault problem caused by a port fault on a corresponding interface board.

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

The following describes the link fault handling method provided in embodiments of this application.

FIG. 2 is a flowchart of a link fault handling method according to an embodiment of this application. The method is applied to a network device. The network device includes a forwarding plane component, a port status register, and a plurality of ports. In FIG. 2, the foregoing network device in the box form is used as an example for description. Refer to FIG. 2. The method includes the following steps.

Step 201: A forwarding plane component of a network device maintains a reference state table by polling a port status register, where the reference state table indicates whether a plurality of links on which a plurality of ports of the network device are respectively located are faulty.

The reference state table is stored in the forwarding plane component, and when forwarding a data flow, the forwarding plane component determines, by querying the reference state table, whether to perform link switching. The reference state table may include a link state table (link state table, LST) or a port state table (port state table, PST). The LST is used for recording a link state of each of the plurality of links. The link state indicates whether a corresponding link is faulty. The PST is used for recording a port state of each of the plurality of ports. The port state indicates whether a corresponding port is available, that is, whether the corresponding port is faulty. In this embodiment of this application, one port corresponds to one link, different ports correspond to different links, and the port state of each port can be further used for indicating whether the link on which the corresponding port is located is faulty.

First, an example in which the reference state table includes the LST is used for describing an implementation in which the forwarding plane component maintains the reference state table by polling the port status register.

In this embodiment of this application, the forwarding plane component polls the port status register, to determine whether a port that has a state change exists in the plurality of ports. When determining that the port that has the state change exists in the plurality of ports, the forwarding plane component changes a first link state in the LST to a faulty state, where the first link state is a state of a link on which the port that has the state change is located. The port state of each port is an available state or an unavailable state, and the state change includes a change from the available state to the unavailable state.

The forwarding plane component polls the port status register, and compares a register value obtained through current polling with a register value obtained through a previous time of polling, to determine whether the port that has the state change exists in the plurality of ports. For example, the port status register includes a plurality of bits, the plurality of bits respectively correspond to the plurality of ports of the network device, and a value of each bit indicates a port state of a corresponding port. The value of each bit may be a first value or a second value, the first value represents the available state, and the second value represents the unavailable state. If a value of a first bit obtained through the current polling is the second value, and a value of a first bit obtained through the previous time of polling is the first value, the forwarding plane component determines that a port corresponding to the first bit is the port that has the state change. If a value of a first bit obtained through the current polling is the same as a value of a first bit obtained through the previous time of polling, the forwarding plane component determines that a port corresponding to the first bit is a port that does not have a state change. The first value and the second value may be '1' and '0' respectively, or the first value and the second value may be '0' and '1' respectively.

Optionally, the LST records a correspondence between link indexes and the link states of the plurality of links, and the network device further stores a port and link index mapping table. Based on this, the forwarding plane component polls the port status register, and when finding that the port that has the state change exists in the plurality of ports, the forwarding plane component queries the port and link index mapping table for a link index corresponding to a first port index, to obtain a first link index. The first port index is an index of the port that has the state change. The forwarding plane component queries the LST for a link state corresponding to the first link index, to obtain the first link state. A link indexed by the first link index is the link on which the port that has the state change is located.

There are a plurality of implementations in which the forwarding plane component determines the first port index.

In an implementation, a sequence number of each bit in the port status register is a port index of the corresponding port. For example, a port index of a port corresponding to an i^{th} bit in the port status register is 'i'. Based on this, the forwarding plane component polls the plurality of bits of the port status register, determines a sequence number of a bit corresponding to the port that has the state change in the plurality of ports, and uses the sequence number as the first port index.

For example, the port status register is a 32-bit register, that is, there are 32 bits in total. The network device includes 16 ports. 16 bits in the port status register are used for storing the port states of the plurality of ports. Sequence numbers of the 16 bits are sequentially 1, 2, 3, ..., and 16. The forwarding plane component polls the 16 bits, and determines that a sequence number of a bit corresponding to the port that has the state change in the 16 ports is 3, that is, a port corresponding to a third bit is the port that has the state change. The forwarding plane component uses 3 as the first port index.

In another implementation, the network device further stores a correspondence between a sequence number of each bit and a port identifier of a corresponding port in the port status register, and a correspondence between port identifiers and port indexes of the plurality of ports. The forwarding plane component polls the plurality of bits in the port status register, determines a sequence number of a bit corresponding to the port that has the state change in the plurality of ports, and determines, from the correspondence between the sequence number of each bit and the port identifier of the corresponding port in the port status register, a port identifier corresponding to the sequence number, to obtain a first port identifier, where the first port identifier is a port identifier of the port that has the state change. Then, the forwarding plane component queries the correspondence between the port identifiers and the port indexes of the plurality of ports for a port index corresponding to the first port identifier, to obtain the first port index.

For example, sequence numbers of the plurality of bits in the port status register are sequentially 1, 2, ..., and 18. Port identifiers corresponding to the plurality of sequence numbers are sequentially Pa01, Pa02, Pc03, ..., and Ph05. Port indexes corresponding to the 18 port identifiers are sequentially 0, 1, 2, ..., and 17. The forwarding plane component determines that a sequence number of a bit corresponding to the port that has the state change is 3, and then determines, from a correspondence between a sequence number and a port identifier, that a port identifier corresponding to the sequence number 3 is Pc03, that is, the first port identifier is Pc03. Then, the forwarding plane component determines, from the correspondence between the port identifiers and the port indexes, that a port index corresponding to the port identifier Pc03 is 2, that is, the first port index is 2.

In this embodiment of this application, the link state of each link recorded by the LST is 'up' or 'down', 'up' represents a normal state, that is, a no-fault state, and 'down' represents a faulty state. Alternatively, the link state is '1' or '0', '1' represents a normal state, and '0' represents a faulty state. Alternatively, the link state may be represented in another manner.

Next, an example in which the reference state table includes the PST is used below to describe an implementation in which the forwarding plane component maintains the reference state table by polling the port status register.

In this embodiment of this application, the forwarding plane component polls the port status register, to determine whether a port that has a state change exists in the plurality of ports, where the state change includes a change from an available state to an unavailable state. When determining that the port that has the state change exists in the plurality of ports, the forwarding plane component changes a first port state in the PST to the unavailable state, where the first port state is a state of the port that has the state change.

For a specific implementation in which the forwarding plane polls the port status register, to determine whether the port that has the state change exists in the plurality of ports, refer to the foregoing related content. Details are not described herein again.

Optionally, the port state table records a correspondence between port indexes and port states of the plurality of ports. Based on this, before changing the first port state in the PST to the unavailable state, the forwarding plane component queries the PST for a port state corresponding to a first port index, to obtain the first port state. The first port index is an index of the port that has the state change. For an implementation in which the forwarding plane component determines the first port index, refer to the foregoing related content. Details are not described herein again.

In this embodiment of this application, the port state of each port recorded by the PST is 'up' or 'down', 'up' represents an available state, and 'down' represents an unavailable state. Alternatively, the port state is '1' or '0', '1' represents an available state, and '0' represents an unavailable state. Alternatively, the port state may be represented in another manner.

Optionally, to increase a link fault handling speed, the forwarding plane component may poll the port status register through a sub-millisecond-level polling mechanism. In other words, the forwarding plane component polls the port status register based on a sub-millisecond-level polling periodicity. The polling periodicity is less than 1 millisecond. For example, the polling periodicity is 100 microseconds or 200 microseconds. In this embodiment of this application, a sub-millisecond-level link fault handling speed is achieved through the sub-millisecond-level polling mechanism.

It can be learned from the foregoing descriptions that, in this embodiment of this application, the forwarding plane component maintains the reference state table by polling the port status register, that is, updates the reference state table in time by polling the port status register, to ensure real-time performance and accuracy of the reference state table.

The network device further includes a PHY chip. The plurality of ports are ports of the PHY chip. The port status register is a register in the PHY chip. A value of the port status register is changed by the PHY chip when the PHY chip detects that a faulty port exists in the plurality of ports.

For example, after a first port in the PHY chip is faulty, the first port generates a hardware interrupt signal, so that the PHY chip changes, based on the hardware interrupt signal, a value of a bit corresponding to the first port in the port status register. For example, the value of the bit corresponding to the first port is changed from '1' to '0'. '1' represents a no-fault state, that is, the available state, and '0' represents a faulty state, that is, the unavailable state. The hardware interrupt signal may carry an identifier of the first port. The PHY chip obtains the identifier of the first port from the hardware interrupt signal, and changes, based on a sequence number of a bit corresponding to the identifier of the first port, a value of a corresponding bit in the port register.

Step 202: The forwarding plane component queries a forwarding table and the reference state table based on a to-be-forwarded data flow, to determine whether a link used for transmitting the data flow is a faulty link.

In this embodiment of this application, the network device further stores the forwarding table. After obtaining the to-be-forwarded data flow, the forwarding plane component sequentially queries the forwarding table and the reference state table, to determine whether the link used for transmitting the data flow is the faulty link.

In an implementation in which the reference state table is the LST, the forwarding plane component queries the forwarding table for an egress port corresponding to the data flow. Then, the forwarding plane component queries the LST for a link state of a link on which the egress port is located. When the link state of the link on which the egress port is located is a faulty state, the forwarding plane component determines that the link used for transmitting the data flow is the faulty link.

Optionally, the forwarding plane component queries, through an FRR component, the LST for the link state of the link on which the egress port is located. Subsequently, the forwarding plane component may quickly perform active/standby link switching through the FRR component. That is, the network device is configured with the FRR component that supports an FRR mechanism, and the forwarding plane component queries the LST through the FRR component.

The LST records a correspondence between link indexes and the link states of the plurality of links, the forwarding table records a correspondence between information about data flow and an egress port index, and the network device further stores a port and link index mapping table. Based on this, the forwarding plane component determines information about the to-be-forwarded data flow, queries for an entry corresponding to the information about the data flow in the forwarding table, and obtains an egress port index in the entry. Then, the forwarding plane component queries the port and link index mapping table for a link index corresponding to the egress port index, to obtain a link index of the link on which the egress port is located. The forwarding plane component queries the LST for a link state corresponding to the link index of the link on which the egress port is located, to obtain the link state of the link on which the egress port is located.

In an implementation in which the reference state table is the PST, the forwarding plane component queries the forwarding table for an egress port corresponding to the data flow, and the forwarding plane component queries the PST for a port state of the egress port. When the port state of the egress port is an unavailable state, the forwarding plane component determines that the link used for transmitting the data flow is the faulty link.

The PST records the correspondence between the port indexes and the port states of the plurality of ports, and the forwarding table records a correspondence between data flow information and an egress port index. Based on this, the forwarding plane component determines information about the to-be-forwarded data flow, queries for an entry corresponding to the information about the data flow in the forwarding table, and obtains an egress port index in the entry. Then, the forwarding plane queries the PST for a port state corresponding to the egress port index, to obtain the port state of the egress port.

In this embodiment of this application, the information about the data flow in the forwarding table may include 5-tuple information of the data flow, or may include other information. In addition to recording the information about the data flow and the egress port index, the forwarding table may further record next-hop routing information. The next-hop routing information may include information about a next-hop network device and/or ingress port information of the next-hop network device. The forwarding table may further record other information. This is not limited in this embodiment of this application.

Step 203: When determining that the link used for transmitting the data flow is the faulty link, the forwarding plane component determines an alternative link of the faulty link.

In this embodiment of this application, when determining that the link used for transmitting the data flow is the faulty link, the forwarding plane component automatically determines the alternative link of the faulty link. There is no need to report fault information to a control plane CPU, and there is no need to perform control plane path computation or deliver a path switching instruction.

In a first implementation of determining the alternative link, the forwarding plane component obtains a standby link corresponding to the faulty link from a correspondence between active and standby links to serve as the alternative link. It should be understood that the network device stores the correspondence between the active and standby links.

Optionally, the forwarding plane component obtains, from the correspondence between the active and standby links through the FRR component, the standby link corresponding to the faulty link as the alternative link.

Optionally, any active link and a corresponding standby link recorded in the correspondence between the active and standby links are equal-cost paths. The equal-cost paths are determined based on an equal-cost multi-path (equal-cost multi-path, ECMP) policy.

For example, data flows that pass through a network device A need to be sent to a same destination. It is assumed that the destination is a network device B. Three equal-cost paths from the network device A to the network device B are computed based on the ECMP policy. The three equal-cost paths include a link 1, a link 2, and a link 3. In this case, in some embodiments, the link 2 may be used as a standby link of the link 1, the link 2 may be used as a standby link of the link 3, and the link 1 may be used as a standby link of the link 3. A correspondence between active and standby links stored in the network device A includes {[active: link 1, standby: link 2], [active: link 2, standby: link 3], [active: link 3, standby: link 1]}. Each data flow that passes through the network device A and whose destination is the network device B may be load-balanced to the three equal-cost paths. For example, the network device performs a hash operation on flow information of a data flow a by using a hash algorithm, and an obtained hash value is 10. A remainder of 10 divided by 3 is computed, and the obtained remainder is 1. In this case, the network device sends the data flow a through the link 1. If the network device also performs computation on a data flow b according to the foregoing method, and an obtained remainder is 2, the network device sends the data flow b through the link 2. If a port 1 of the network device is faulty, causing a fault on the link 1 on which the port 1 is located, the network device determines that an alternative link of the link 1 is the link 2.

In a second implementation of determining the alternative link, the forwarding plane component determines the alternative link from a plurality of equal-cost paths of the faulty link by using a hash algorithm. The plurality of equal-cost paths are determined based on an ECMP policy. It should be understood that, the plurality of equal-cost paths are pre-determined, to implement fast reroute by using the hash algorithm. There is no need to perform path re-computation based on a network topology. For example, there is no need to perform link re-computation based on the network topology and by using an OSPF algorithm. In this way, convergence time of link fault handling can also be shortened as much as possible.

For example, three equal-cost paths determined by the network device based on the ECMP policy include a link 1, a link 2, and a link 3. When the link 1 is a faulty link, the network device computes, by using the hash algorithm, a remainder corresponding to a data flow that is originally to be sent through the link 1, and adds a preset value to the remainder, to obtain a target value. The network device computes a remainder of the target value divided by 3, and uses a link corresponding to the remainder as an alternative link. The preset value is any integer that is not exactly divided by 3. Assuming that the link 1 is faulty, the remainder corresponding to the data flow that is originally to be sent through the link 1 is 1, and the preset value is 2, the network device determines that the alternative link is the link 3.

In addition to the foregoing two implementations, the network device may alternatively determine the alternative link of the faulty link in another manner. This is not limited in this embodiment of this application.

Step 204: The forwarding plane component updates the forwarding table based on the alternative link, to switch the data flow to the alternative link.

In this embodiment of this application, after determining the alternative link of the faulty link, the forwarding plane component may switch a service on the faulty link to the alternative link by changing the forwarding table, that is, switch a data flow that is originally to be transmitted through the faulty link to the alternative link.

For example, the forwarding table records the correspondence between the information about the data flow and the egress port index. Based on this, the forwarding plane component determines information about the data flow of the service on the faulty link, including: determining the information about the to-be-forwarded data flow in step 203, querying for the entry corresponding to the information about the data flow in the forwarding table, and changes the egress port index in the entry to a port index of an egress port corresponding to the alternative link, so that when the data flow is forwarded based on the forwarding table, the service on the faulty link is switched to the alternative link, that is, the data flow is sent, based on a changed forwarding table, from the egress port corresponding to the alternative link.

When the forwarding table further records the next-hop routing information, the forwarding plane component further changes next-hop routing information in the entry in the forwarding table to next-hop routing information corresponding to the alternative link.

It can be learned from the foregoing descriptions that in this embodiment of this application, one port in the network device corresponds to one link, and different ports are located on different links. A link in this specification is a link between two ports of two adjacent network devices. For example, the faulty link is a link between the faulty first port and a port that communicates with the first port in the next-hop network device, and the alternative link is a link between a non-faulty second port in the network device and a port that communicates with the second port in the next-hop network device. An egress port corresponding to the alternative link is the second port. The next-hop routing information corresponding to the alternative link may include the information about the next-hop network device, and/or information about a port that communicates with the second port in the next-hop network device.

Optionally, the forwarding plane component of the network device is a programmable logic device. In this way, this solution can be implemented by correspondingly changing related logic of link fault handling on an existing forwarding plane component.

It can be learned from the foregoing that, in this solution, the forwarding plane component performs an operation on the port state table, the link state table, and the forwarding table on a data plane, that is, the network device handles a local link fault on the data plane through the forwarding plane component. Therefore, this solution is essentially a local link fault convergence solution based on the data plane.

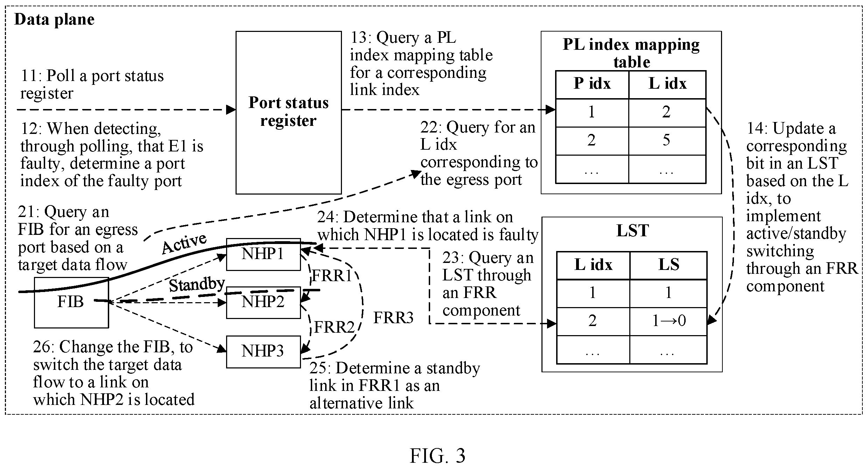

The following describes the link fault handling method provided in embodiments of this application again by using an example with reference to FIG. 3 to FIG. 5.

FIG. 3 is a flowchart of another link fault handling method according to an embodiment of this application. In FIG. 3, a network device is configured with an ECMP policy and an FRR mechanism. The network device includes a forwarding plane component, and stores a correspondence between active and standby links, an LST, a port and link index mapping table (PL index mapping table), and a forwarding table (forwarding information table, FIB). The network device further includes a port status register. The network device further includes a plurality of ports. Identifiers (port identifiers, PIDs) of these ports are E1, E2, and the like respectively.

As shown in FIG. 3, next-hop (next-hop, NHP) routing information of three equal-cost paths determined by the network device based on the ECMP policy is NHP1, NHP2, and NHP3 respectively. NHP1, NHP2, and NHP3 correspond to E1, E2, and E3 respectively. The correspondence between the active and standby links includes FRR1, FRR2, and FRR3. FRR1 represents a correspondence in which a link on which NHP1 is located is an active link and a link on which NHP2 is located is a standby link. FRR2 represents a correspondence in which the link on which NHP2 is located is an active link and a link on which NHP3 is located is a standby link. FRR3 represents a correspondence in which a link on which NHP3 is located is an active link and the link on which NHP1 is located is a standby link.

The link fault handling method shown in FIG. 3 includes two processes. In a first process, the forwarding plane component of the network device maintains the LST by polling the port status register. In a second process, in a process of forwarding a data flow, the forwarding plane component determines, based on the forwarding table and the LST, whether a link used for transmitting the data flow is a faulty link. When determining that a link used for transmitting a data flow is a faulty link, active/standby switching is performed quickly through an FRR component supporting the FRR mechanism.

The first process includes the following steps:
Step 11: The forwarding plane component polls the port status register through a sub-millisecond-level polling mechanism.
Step 12: For example, E1 is faulty. When determining, by polling the port status register, that a port state of the port E1 is changed, the forwarding plane component determines a port index (port index, P idx) of the port E1, where determined P idx is 1.
Step 13: The forwarding plane component queries the PL index mapping table for an entry whose P idx is 1, and obtains a link index (link index, L idx) in the entry, where obtained L idx is 2.
Step 14: The forwarding plane component queries the LST for an entry whose L idx is 2, and changes a link state in the entry from a no-fault state (denoted as bit 1) to a faulty state (denoted as bit 0).

The second process includes the following steps:
Step 21: The forwarding plane component queries the FIB based on a to-be-forwarded target data flow, to obtain P idx of an egress port corresponding to the target data flow.
Step 22: Assuming that found P idx of the egress port is 1, the forwarding plane component queries the PL index mapping table for an entry whose P idx is 1, to obtain L idx in the entry.
Step 23: Assuming that found L idx is 2, the forwarding plane component queries, through the FRR component, the LST for an entry whose L idx is 2, to obtain a bit value indicating a link state in the entry.
Step 24: When the obtained bit value is 0, the forwarding plane component determines that a link whose L idx is 2 is a faulty link. The faulty link is the link on which NHP1 is located, that is, a link originally used for transmitting the target data flow.
Step 25: The forwarding plane component obtains, from the correspondence between the active and standby links through the FRR component, a standby link corresponding to the link on which NHP1 is located as an alternative link. The standby link is the link on which NHP2 is located, that is, the alternative link is the link on which NHP2 is located.
Step 26: The forwarding plane component changes the egress port corresponding to the target data flow in the FIB to an egress port corresponding to NHP2, and changes next-hop routing information to NHP2, to switch the target data flow to the link on which NHP2 is located, when the data flow is forwarded based on the FIB. The target data flow is a data flow that is originally to be sent through the link on which NHP1 is located.

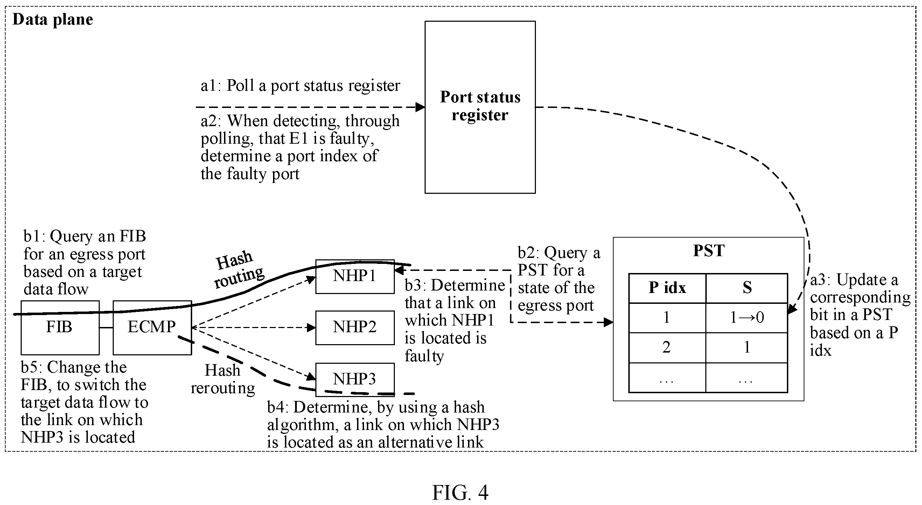

FIG. 4 is a schematic diagram of still another link fault handling method according to an embodiment of this application. Compared with FIG. 3, in FIG. 4, a network device stores a PST, and may not be configured with an FRR mechanism. The link fault handling method shown in FIG. 4 also includes two processes. In a first process, a forwarding plane component of the network device maintains the PST by polling a port status register. In a second process, in a process of forwarding a data flow, the forwarding plane component determines, based on a forwarding table and the PST, whether a link used for transmitting the data flow is a faulty link. When determining that a link used for transmitting a data flow is a faulty link, an alternative link of the faulty link is determined by using a hash algorithm, and a service on the faulty link is switched to the alternative link.

The first process includes the following steps:
Step a1: The forwarding plane component polls the port status register through a sub-millisecond-level polling mechanism.
Step a2: For example, E1 is faulty. When determining, by polling the port status register, that a port state of the port E1 is changed, the forwarding plane component determines P idx of the port E1, where determined P idx is 1.
Step a3: The forwarding plane component queries the PST for an entry whose P idx is 1, and changes the port state in the entry from an available state (denoted as a bit 1) to an unavailable state (denoted as a bit 0).

The second process includes the following steps:
Step b1: The forwarding plane component queries the forwarding table based on a to-be-forwarded target data flow, to obtain P idx of an egress port corresponding to the target data flow.
Step b2: Assuming that found P idx of the egress port is 1, the forwarding plane component queries the PST for an entry whose P idx is 1, to obtain a port state in the entry.
Step b3: When the obtained port state is the unavailable state, the forwarding plane component determines that a link on which a port whose P idx is 1 is located is a faulty link. The faulty link is a link on which NHP1 is located. As shown in FIG. 4, the faulty link is a link determined through hash routing, that is, a link that the target data flow originally passes through. The target data flow is a data flow that is originally to be sent through the link on which NHP1 is located.
Step b4: The forwarding plane component determines, by using the hash algorithm and from three equal-cost paths determined based on an ECMP policy, that an alternative link of the link on which NHP1 is located is a link on which NHP3 is located.
Step b5: The forwarding plane component changes the egress port corresponding to the target data flow in the FIB to an egress port corresponding to NHP3, and changes next-hop routing information to NHP3, to switch the target data flow to the link on which NHP3 is located, when the data flow is forwarded based on the FIB. That is, as shown in FIG. 4, the alternative link is a link determined through hash rerouting.

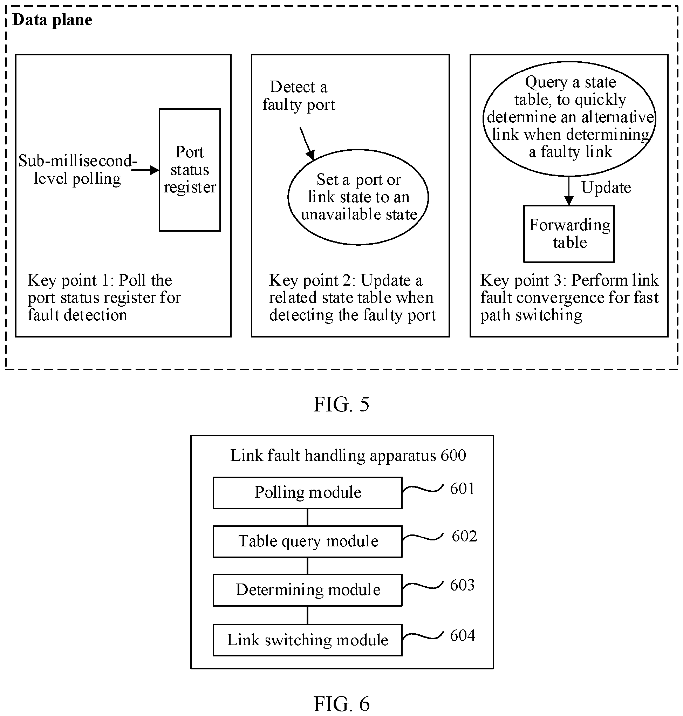

FIG. 5 shows key points of a solution related to a link fault handling method according to an embodiment of this application. For example, a forwarding plane component is a programmable logic device. The forwarding plane component includes a programmable module of a data plane. Refer to FIG. 6. This solution includes the following three key points:
(1): Poll a port status register for fault detection. That is, the programmable module of the data plane polls the port status register to determine a faulty port. A polling periodicity may be a sub-millisecond-level periodicity.
(2): Update a related state table when a fault is detected. To be specific, when determining, through polling, that the faulty port exists, the programmable module of the data plane immediately updates a reference state table, including a port state table and/or a link state table, that is, sets a port state and/or a link state recorded by the forwarding plane component to an unavailable state.
(3): Perform link fault convergence for fast path switching. To be specific, in a process of forwarding a data flow, a forwarding table and the reference state table are queried to determine whether a link used for transmitting the data flow is a faulty link. When it is determined that the link for the data flow is the faulty link, an alternative link of the faulty link is quickly determined through an FRR mechanism or by using a hash algorithm, and an FIB is updated to switch a service on the faulty link to the alternative link.

An overall idea of this solution may also be applied to traffic monitoring. For example, the forwarding plane component monitors traffic volumes of a plurality of egress ports in real time, when detecting that traffic of an egress port reaches a maximum port traffic warning condition, sets a port state of the egress port to an alarm state, and determines an alternative link of a link on which the egress port is located. The traffic of the egress port that is set to the alarm state needs to be immediately switched to the alternative link, that is, to another egress port of the network device.

In conclusion, in embodiments of this application, the PHY chip does not need to report fault information to the control plane CPU, or wait for the control plane CPU to deliver an instruction. The forwarding plane component updates the reference state table in time by actively polling the port status register, so that when forwarding the data flow, the forwarding plane component can sense a local faulty link in time based on the reference state table, and perform link switching in time. That is, this solution does not depend on control plane path computation, and does not require additional communication from a data plane to a control plane, to avoid a delay caused by fault handling of a CPU. In this solution, short time is consumed from detection of a link fault to completion of link switching is short, a convergence speed of link fault handling is higher and more stable, impact of the link fault on a service is small, and network reliability is greatly improved. In an implementation in which the forwarding plane component performs sub-millisecond-level polling on the port status register, time from occurrence of a port fault to completion of link switching is at a sub-millisecond level, so that sub-millisecond-level path switching can be implemented in a case of a link fault in this solution.

FIG. 6 is a schematic diagram of a structure of a link fault handling apparatus 600 according to an embodiment of this application. The link fault handling apparatus 600 may be implemented as a part or all of a network device by using software, hardware, or a combination thereof. In this embodiment of this application, the apparatus 600 is used in a forwarding plane component of a network device. The network device further includes a plurality of ports and port status registers. Refer to FIG. 6. The apparatus 600 includes: a polling module 601, a table query module 602, a determining module 603, and a link switching module 604.

The polling module 601 is configured to maintain a reference state table by polling the port status register, where the reference state table indicates whether a plurality of links on which the plurality of ports are respectively located are faulty.

The table query module 602 is configured to query a forwarding table and the reference state table based on a to-be-forwarded data flow, to determine whether a link used for transmitting the data flow is a faulty link.

The determining module 603 is configured to: when determining that the link used for transmitting the data flow is the faulty link, determine an alternative link of the faulty link.

The link switching module 604 is configured to update the forwarding table based on the alternative link, to switch the data flow to the alternative link.

Optionally, the reference state table includes a link state table, and the link state table is used for recording a link state of each of the plurality of links.

The polling module 601 includes:
a first polling submodule, configured to poll the port status register, to determine whether a port that has a state change exists in the plurality of ports, where the state change includes a change from an available state to an unavailable state; and
a second update submodule, configured to: when determining that the port that has the state change exists in the plurality of ports, change a first link state in the link state table to a faulty state, where the first link state is a state of a link on which the port that has the state change is located.

Optionally, the link state table records a correspondence between link indexes and link states of the plurality of links.

The polling module 601 further includes:
a first query submodule, configured to query a port and link index mapping table for a link index corresponding to a first port index, to obtain a first link index, where the first port index is an index of the port that has the state change; and
a second query submodule, configured to query the link state table for a link state corresponding to the first link index, to obtain the first link state.

Optionally, the table query module 602 includes:
a third query submodule, configured to query the forwarding table for an egress port corresponding to the data flow;
a fourth query submodule, configured to query the link state table for a link state of a link on which the egress port is located; and
a first determining submodule, configured to: when the link state of the link on which the egress port is located is a faulty state, determine that the link used for transmitting the data flow is the faulty link.

Optionally, the forwarding plane component queries, through a fast reroute mechanism, the link state table for the link state of the link on which the egress port is located.

Optionally, the reference state table includes a port state table, and the port state table is used for recording a port state of each of the plurality of ports.

The polling module 601 includes:
a second polling submodule, configured to poll the port status register, to determine whether a port that has a state change exists in the plurality of ports, where the state change includes a change from an available state to an unavailable state; and
a second update submodule, configured to: when it is determined that the port that has the state change exists in the plurality of ports, change a first port state in the port state table to an unavailable state, where the first port state is a state of the port that has the state change.

Optionally, the port state table records a correspondence between port indexes and port states of the plurality of ports.

The polling module 601 further includes:
a fifth query submodule, configured to query the port state table for a port state corresponding to a first port index, to obtain the first port state, where the first port index is an index of the port that has the state change.

Optionally, the table query module 602 includes:
a sixth query submodule, configured to query the forwarding table for an egress port corresponding to the data flow;
a seventh query submodule, configured to query the port state table for a port state of the egress port; and
a second determining submodule, configured to: when the port state of the egress port is an unavailable state, determine that the link used for transmitting the data flow is the faulty link.

Optionally, the determining module 603 includes:
an obtaining submodule, configured to obtain a standby link corresponding to the faulty link from a correspondence between active and standby links through the fast reroute mechanism to serve as the alternative link.

Optionally, the determining module 603 includes:
a third determining submodule, configured to determine the alternative link from a plurality of equal-cost links of the faulty link by using a hash algorithm.

Optionally, the forwarding plane component polls the port status register through a sub-millisecond-level polling mechanism.

Optionally, the network device further includes a PHY chip. The plurality of ports are ports of the PHY chip. The port status register is a register in the PHY chip. A value of the port status register is changed by the PHY chip when the PHY chip detects that a faulty port exists in the plurality of ports.

Optionally, the forwarding plane component is a programmable logic device.

In this embodiment of this application, the PHY chip does not need to report fault information to a control plane CPU, or wait for the control plane CPU to deliver an instruction. The forwarding plane component updates the reference state table in time by actively polling the port status register, so that when forwarding a data flow, the forwarding plane component can sense a local faulty link in time based on the reference state table, and perform link switching in time. That is, this solution does not depend on control plane path computation, and does not require additional communication from a data plane to a control plane, to avoid a delay caused by fault handling of the CPU. In this solution, short time is consumed from detection of a link fault to completion of link switching is short, a convergence speed of link fault handling is higher and more stable, impact of the link fault on a service is small, and network reliability is greatly improved. In an implementation in which the forwarding plane component performs sub-millisecond-level polling on the port status register, time from occurrence of a port fault to completion of link switching is at a sub-millisecond level, so that sub-millisecond-level path switching can be implemented in a case of a link fault in this solution.

It should be noted that, when the link fault handling apparatus provided in the foregoing embodiment handles a link fault, division of the foregoing function modules is merely used as an example for description. During actual application, the foregoing functions may be allocated to different function modules for implementation as required. That is, an internal structure of the apparatus is divided into different function modules to implement all or some of the functions described above. In addition, the link fault handling apparatus provided in the foregoing embodiment and the link fault handling method embodiment belong to a same idea. For a specific implementation process, refer to the method embodiment. Details are not described herein again.

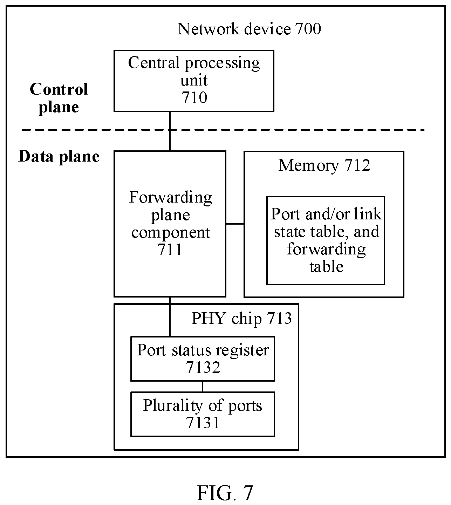

FIG. 7 is a schematic diagram of a structure of a network device according to an embodiment of this application. The network device may be any network device in the embodiments in FIG. 1 to FIG. 6. The network device 700 may be a switch, a router, or another network device that has a forwarding function. In this embodiment, the network device 700 includes a central processing unit 710, a forwarding plane component 711, a memory 712, and a PHY chip 713. The PHY chip 713 includes a plurality of ports 7131 and a port status register 7132.

The central processing unit 710 is configured to complete functions such as system management and device maintenance. The forwarding plane component 711 is configured to implement the link fault handling method provided in embodiments of this application. The memory 712 is configured to store a port and/or link state table, a forwarding table, and the like. The PHY chip 713 is configured to change a value of the port status register 7132 when detecting that a faulty port exists in the plurality of ports 7131. The forwarding plane component 711 may maintain an entry in the memory 712 by polling the port status register, to implement the foregoing link fault handling method. The plurality of ports 7131 are configured to receive and send a data flow and other information. The central processing unit 710 belongs to a control plane of the network device, and the forwarding plane component 711 and the memory 712 belong to a data plane of the network device.

In some embodiments, the memory 712 is further configured to store program code for executing the solutions of this application. The forwarding plane component 711 can execute the program code stored in the memory 712, to enable the network device 700 to perform the processing steps of the network device in the embodiments shown in FIG. 2 to FIG. 5. For a specific implementation, refer to detailed descriptions in the embodiments shown in FIG. 2 to FIG. 5. Details are not described herein again.

The program code may include one or more software modules. For example, when the polling module 601, the table query module 602, the determining module 603, and the link switching module 604 in the embodiment shown in FIG. 6 are implemented by using software, the program code may include a polling module, a table query module, a determining module, and a link switching module. The polling module is configured to maintain a reference state table by polling the port status register, where the reference state table indicates whether a plurality of links on which the plurality of ports 7131 are respectively located are faulty, and the reference state table includes a port state table and/or a link state table. The table query module is configured to query the forwarding table and the reference state table based on a to-be-forwarded data flow, to determine whether a link used for transmitting the data flow is a faulty link. The determining module is configured to: when determining that the link used for transmitting the data flow is the faulty link, determine an alternative link of the faulty link. The link switching module is configured to update the forwarding table based on the alternative link, to switch the data flow to the alternative link. For a specific implementation, refer to detailed descriptions in the embodiments shown in FIG. 2 to FIG. 5. Details are not described herein again.

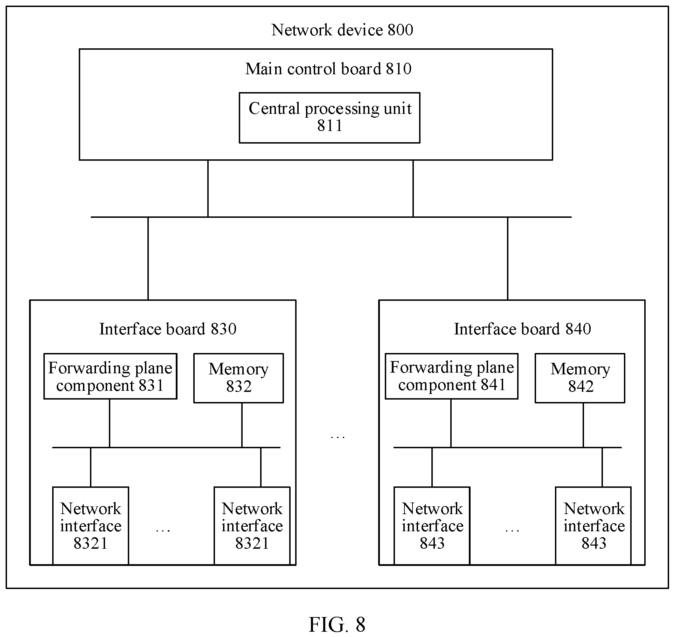

FIG. 8 is a schematic diagram of a structure of another network device according to an embodiment of this application. The network device may be any network device in the embodiments in FIG. 1 to FIG. 6. The network device 800 may be a switch, a router, or another network device that forwards a packet. In this embodiment, the network device 800 includes a main control board 810, an interface board 830, and an interface board 840. When there are a plurality of interface boards, a switching board (not shown) may be included. The switching board is configured to exchange data between the interface boards (where the interface board is also referred to as a line card or a service board).

The main control board 810 is configured to perform functions such as system management, device maintenance, and protocol processing. The interface boards 830 and 840 are configured to provide various service interfaces (for example, a POS interface, a GE interface, and an ATM interface), and forward a data flow. The main control board 810 mainly includes three types of function units: a system management and control unit, a system clock unit, and a system maintenance unit. The main control board 810, the interface board 830, and the interface board 840 are connected to a system backboard through a system bus to implement interworking. The interface board 830 includes one or more forwarding plane components 831, a memory 832, and a plurality of network interfaces 8321. The forwarding plane component may include a PHY chip (not shown). The plurality of network interfaces 8321 are specifically ports. The plurality of network ports may be deployed on one or more PHY chips, and each PHY chip further includes a port status register (not shown).

Each PHY chip is configured to change a value of a port status register of the PHY chip when detecting a port fault in at least one port of the PHY chip.

The forwarding plane component 831 is configured to implement the link fault handling method provided in embodiments of this application, and forward a data flow. The memory 832 on the interface board 830 is configured to store a port state table and/or a link state table, and a forwarding table. The forwarding plane component 831 maintains a related entry in the memory by polling the port status register, to implement the foregoing link fault handling method. The forwarding plane component 831 forwards a data flow by searching a forwarding entry stored in the memory 832. In some other embodiments, the forwarding plane component 831 is further configured to control and manage the interface board 830 and communicate with a central processing unit 811 on the main control board 810.

The forwarding plane component 831 may be one or more integrated circuits configured to implement the solutions of this application, for example, an application-specific integrated circuit (application-specific integrated circuit, ASIC), a programmable logic device (programmable logic device, PLD), or a combination thereof. Optionally, the PLD is a complex programmable logic device (complex programmable logic device, CPLD), a field programmable gate array (field programmable gate array, FPGA), generic array logic (generic array logic, GAL), or any combination thereof.

The one or more network interfaces (that is, the port 8321) included in the interface board 830 are configured to receive a data flow or other information sent by a terminal or another device in a network, and process the data flow or data information based on an instruction of the forwarding plane component 831. A specific implementation process is not described herein one by one.

It may be understood that, as shown in FIG. 8, in this embodiment of this application, a plurality of interface boards are included, and a distributed forwarding mechanism is used. In this mechanism, the interface board 840 includes a forwarding plane component 41, a memory 42, and a plurality of network interfaces 843. An operation on the interface board 840 is basically similar to an operation on the interface board 830. For brevity, details are not described again. In addition, it may be understood that, the forwarding plane component 831 and/or the forwarding plane component 841 in FIG. 8 may be a programmable logic device, or may be dedicated hardware or a chip, for example, a network processor or an application-specific integrated circuit (application-specific integrated circuit, ASIC). This implementation is generally referred to as a manner of using dedicated hardware or a chip for processing on a forwarding plane.

In addition, there may be one or more main control boards. When there are a plurality of main control boards, the main control boards may include an active main control board and a standby main control board. There may be one or more interface boards, and the device with a stronger data processing capability provides more interface boards. In a case of a plurality of interface boards, the plurality of interface boards may communicate with each other through one or more switching boards, and load sharing and redundancy backup may be implemented by the plurality of interface boards together. In a centralized forwarding architecture, the device may not need a switching board, and the interface board implements a function of processing service data of an entire system. In a distributed forwarding architecture, the device includes a plurality of interface boards, and may implement data exchange between the plurality of interface boards through the switching board, to provide a large-capacity data exchange and processing capability. Therefore, a data access and processing capability of the network device in the distributed architecture is better than that of the device in the centralized architecture. A specific architecture that is to be used depends on a specific networking deployment scenario. This is not limited herein.

In some embodiments, the memory 832 may be a read-only memory (read-only memory, ROM), a random access memory (random access memory, RAM), an electrically erasable programmable read-only memory (electrically erasable programmable read-only memory, EEPROM), an optical disc (including a compact disc read-only memory (compact disc read-only memory, CD-ROM), a compact disc, a laser disc, a digital versatile disc, a Blu-ray disc, or the like), a magnetic disk storage medium or another magnetic storage device, or any other medium that can be used for carrying or storing expected program code in a form of instructions or a data structure and that is accessible by a computer. However, the memory is not limited hereto. The memory 832 may exist independently, and is connected to the forwarding plane component 831 through a communication bus. Alternatively, the memory 832 may be integrated with the forwarding plane component 831.

In some embodiments, the network interface 8321 may be configured to communicate with another device or a communication network such as an Ethernet, a radio access network (radio access network, RAN), or a wireless local area network (wireless local area network, WLAN) through any apparatus such as a transceiver. The network interface 833 includes a wired network interface, and may further include a wireless network interface. The wired network interface may be, for example, an Ethernet interface. The Ethernet interface may be an optical interface, an electrical interface, or a combination thereof. The wireless network interface may be a WLAN interface, a cellular network communication interface, a combination thereof, or the like.

In some embodiments, the network device 800 may include a plurality of processors. Each of the processors may be a single-core processor, or may be a multi-core processor. The processor herein may be one or more devices, circuits, and/or processing cores configured to process data (for example, computer program instructions).

In some embodiments, the memory 832 is further configured to store program code for executing the solutions of this application. The forwarding plane component 831 may execute the program code stored in the memory 832, to enable the network device 800 to perform the processing steps of the forwarding plane component in the embodiments shown in FIG. 2 to FIG. 5. For a specific implementation, refer to detailed descriptions in the embodiments shown in FIG. 2 to FIG. 5. Details are not described herein again.

All or some of the foregoing embodiments may be implemented by software, hardware, firmware, or any combination thereof. When software is used for implementing the embodiments, all or some of embodiments may be implemented in a form of a computer program product. The computer program product includes one or more computer instructions. When the computer instructions are loaded and executed on the computer, all or some of the procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server or a data center to another website, computer, server or data center in a wired (for example, a coaxial cable, an optical fiber, a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like. It should be noted that the computer-readable storage medium mentioned in embodiments of this application may be a non-volatile storage medium, in other words, may be a non-transitory storage medium.

It should be understood that "at least one" mentioned in this specification refers to one or more, and "a plurality of" refers to two or more. In the descriptions of embodiments of this application, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Information (including but not limited to user equipment information, personal information of a user, and the like), data (including but not limited to data used for analysis, stored data, displayed data, and the like), and signals in embodiments of this application are used under authorization by the user or full authorization by all parties, and capturing, use, and processing of related data need to conform to related laws, regulations, and standards of related countries and regions. For example, a data flow of a service in embodiments of this application is obtained under full authorization.

The foregoing descriptions are merely example embodiments of this application, but are not intended to limit this application. Any modification, equivalent replacement, or improvement made without departing from the spirit and principle of this application should fall within the protection scope of this application.

## Claims

1. A link fault handling method, wherein the method is applied to a network device; the network device comprises a forwarding plane component, a port status register, and a plurality of ports, and the port status register is configured to store a port state of each of the plurality of ports; and the method comprises:
maintaining, by the forwarding plane component, a reference state table by polling the port status register, wherein the reference state table indicates whether a plurality of links on which the plurality of ports are respectively located are faulty;
querying, by the forwarding plane component, a forwarding table and the reference state table based on a to-be-forwarded data flow, to determine whether a link used for transmitting the data flow is a faulty link;
when determining that the link used for transmitting the data flow is the faulty link, determining, by the forwarding plane component, an alternative link of the faulty link; and
updating, by the forwarding plane component, the forwarding table based on the alternative link, to switch the data flow to the alternative link.

2. The method according to claim 1, wherein the reference state table comprises a link state table, and the link state table is used for recording a link state of each of the plurality of links; and
the maintaining, by the forwarding plane component, a reference state table by polling the port status register comprises:
polling, by the forwarding plane component, the port status register, to determine whether a port that has a state change exists in the plurality of ports, wherein the state change comprises a change from an available state to an unavailable state; and
when determining that the port that has the state change exists in the plurality of ports, changing, by the forwarding plane component, a first link state in the link state table to a faulty state, wherein the first link state is a state of a link on which the port that has the state change is located.

3. The method according to claim 2, wherein the link state table records a correspondence between link indexes and link states of the plurality of links; and
before the changing, by the forwarding plane component, a first link state in the link state table to a faulty state, the method further comprises:
querying, by the forwarding plane component, a port and link index mapping table for a link index corresponding to a first port index, to obtain a first link index, wherein the first port index is an index of the port that has the state change; and
querying, by the forwarding plane component, the link state table for a link state corresponding to the first link index, to obtain the first link state.

4. The method according to claim 2 or 3, wherein the querying, by the forwarding plane component, a forwarding table and the reference state table based on a to-be-forwarded data flow, to determine whether a link used for transmitting the data flow is a faulty link comprises:
querying, by the forwarding plane component, the forwarding table for an egress port corresponding to the data flow;
querying, by the forwarding plane component, the link state table for a link state of a link on which the egress port is located; and
when the link state of the link on which the egress port is located is a faulty state, determining, by the forwarding plane component, that the link used for transmitting the data flow is the faulty link.

5. The method according to claim 4, wherein the forwarding plane component queries, through a fast reroute mechanism, the link state table for the link state of the link on which the egress port is located.

6. The method according to claim 1, wherein the reference state table comprises a port state table, and the port state table is used for recording the port state of each of the plurality of ports; and
the maintaining, by the forwarding plane component, a reference state table by polling the port status register comprises:
polling, by the forwarding plane component, the port status register, to determine whether a port that has a state change exists in the plurality of ports, wherein the state change comprises a change from an available state to an unavailable state; and
when determining that the port that has the state change exists in the plurality of ports, changing, by the forwarding plane component, a first port state in the port state table to an unavailable state, wherein the first port state is a state of the port that has the state change.

7. The method according to claim 6, wherein the port state table records a correspondence between port indexes and port states of the plurality of ports; and
before the changing, by the forwarding plane component, a first port state in the port state table to an unavailable state, the method further comprises:
querying, by the forwarding plane component, the port state table for a port state corresponding to a first port index, to obtain the first port state, wherein the first port index is an index of the port that has the state change.

8. The method according to claim 6 or 7, wherein the querying, by the forwarding plane component, a forwarding table and the reference state table based on a to-be-forwarded data flow, to determine whether a link used for transmitting the data flow is a faulty link comprises:
querying, by the forwarding plane component, the forwarding table for an egress port corresponding to the data flow;
querying, by the forwarding plane component, the port state table for a port state of the egress port; and
when the port state of the egress port is an unavailable state, determining, by the forwarding plane component, that the link used for transmitting the data flow is the faulty link.

9. The method according to any one of claims 1 to 8, wherein the determining, by the forwarding plane component, an alternative link of the faulty link comprises:
obtaining, by the forwarding plane component, a standby link corresponding to the faulty link from a correspondence between active and standby links through the fast reroute mechanism to serve as the alternative link.

10. The method according to any one of claims 1 to 8, wherein the determining, by the forwarding plane component, an alternative link of the faulty link comprises:
determining, by the forwarding plane component, the alternative link from a plurality of equal-cost links of the faulty link by using a hash algorithm.

11. The method according to any one of claims 1 to 10, wherein the forwarding plane component polls the port status register through a sub-millisecond-level polling mechanism.

12. The method according to any one of claims 1 to 11, wherein the network device further comprises a physical PHY chip, the plurality of ports are ports of the PHY chip, the port status register is a register in the PHY chip, and a value of the port status register is changed by the PHY chip when the PHY chip detects that a faulty port exists in the plurality of ports.

13. The method according to any one of claims 1 to 12, wherein the forwarding plane component is a programmable logic device.

14. A link fault handling apparatus, wherein the apparatus is used in a forwarding plane component of a network device, and the apparatus is configured to implement the steps of the method according to any one of claims 1 to 13.

15. A network device, wherein the network device comprises a forwarding plane component, a port status register, and a plurality of ports, and the network device is configured to implement the steps of the method according to any one of claims 1 to 13 through the forwarding plane component.

16. A computer-readable storage medium, wherein the storage medium stores a computer program, and when the computer program is executed by a network device, the steps of the method according to any one of claims 1 to 13 are implemented.

17. A computer program product, wherein the computer program product stores computer instructions, and when the computer instructions are executed by a network device, the steps of the method according to any one of claims 1 to 13 are implemented.
